# EUROPEAN PATENT APPLICATION

(11) **EP 3 208 253 A1**
(43) Date of publication of application: **23.08.2017**
(21) Application number: 16305178.2
(22) Date of filing: 16.02.2016
(51) Int. Cl.: C04B 35/553, C04B 35/626, C04B 35/645

(54) **TRANSPARENT FLUORIDE CERAMIC MATERIAL AND A METHOD FOR ITS PREPARATION**

(71) Applicant: Centre National de la Recherche Scientifique, 75016 Paris (FR)
(72) Inventor: LARGETEAU, Alain, 33610 Cestas (FR); PRAKASAM, Mythili, 334000 Talence (FR); MANEK-HÖNNINGER, Inka, 33610 Cestas (FR)
(74) Representative: GIE Innovation Competence Group

(57) **Abstract**

A method for preparing polycrystalline fluoride ceramics using powder of fluoride ceramics nanocrystallites as starting material, wherein said method comprises:
(a) Optionally, a pre-processing step at a temperature ranging from 100°C to 300°C at vacuum of 10⁻⁵ mbar (10⁻³ Pa) to 10⁻⁸ mbar (10⁻⁶ Pa) for 30 minutes to 10 hours,
(b) Applying a uniaxial pressure in the range from 1 to 200 MPa, at or around ambient temperature, to obtain a pre-compacted sample,
(c) Applying to the pre-compacted of step b) a hydrostatic pressure by Cold Isostatic Pressing, to obtain a pre-compacted sample,
(d) Loading the pre-compacted sample from step (c) into a die and submitting said sample to a uniaxial compression in combination with electric field-assisted sintering, under vacuum equal to or higher than 5 Pa.

Polycrystalline fluoride ceramics obtained by this method find use in IR devices.

## Description

The invention is directed to a method for preparing fluoride ceramics with improved properties of IR and visible light transparency and improved mechanical properties. Some ceramic materials obtained by this method are new and are also an object of this invention. Said method uses nanopowders precursor as starting materials and comprises a preforming step followed by a spark plasma sintering step.

### State of the art

Fluoride ceramics are well known materials for varied applications, notably in the optical field, and especially for making laser windows. Such materials have to be optically transparent, the loss factor at the lasing wavelength must be no greater than 10⁻³-10⁻² cm⁻¹. They also have to be mechanically resistant. But achieving this result often proves difficult.

Fluoride ceramics are generally obtained by a hot-pressing technique, via sintering starting material powders under pressure (Fedorov P. et al., Journal of Physics: Conference series 345 (2012) 012017; Fedorov P. and Orlovskii Y., Journal of optical technology, June 2008, 728-736).

The first difficulty comes from the fact that fluorides are prone to hydrolysis, leading to the formation of the corresponding oxides and oxyfluorides. These products form a second phase as inclusions in the material, which results in an optically non homogeneous material. In order to overcome this difficulty, fluoride ceramics have been prepared by hot pressing protocols, starting from polycrystalline powders and turning them into a monolithic body via particle agglomeration. Other methods are based on hot forming/forging of single crystal deformation under pressure which is a very complicated and expensive process. However, mechanical properties of single crystals are often not sufficient for laser manufacturing. CO2 laser windows are submitted to tough mechanical constraints during use. CO2 laser windows on the laser housing are currently made of single crystals. These single crystals are mainly based on Zinc selenide (ZnSe), Zinc sulphide (ZnS) and Germanium (Ge). Single crystals are expensive, mechanically fragile, they require an anti reflective (AR) layer which is toxic and sensitive to scratching. From some substances it is difficult to grow single crystals, because of decomposition upon heating and formation of cleavage planes for example. These single crystals are difficult to shape in order to obtain the appropriate geometry for assembly on the laser unit.

Fluoride ceramics obtained by hot pressing protocols from powders of different production methods, even with the same grain size and purity at least of 97.0%, are generally characterized with different physico-chemical properties, due to the difference in powder preparation methodologies to make the precursor.

Most fluoride optical ceramics are prepared by vacuum sintering and hot pressing methods. In the aforesaid techniques, usage of high temperature > 800°C and very high pressures > 100 MPa with dwell times > 10 min is employed. This temperature is quite high. There are also reports on the obtention of transparent fluoride ceramics from nanoparticles which are vacuum sintered followed by either the hot pressing or the hot isostatic pressing post treatment. Aubry et al (P. Aubry, A. Bensalah, P. Gredin, G. Patriarche, D. Vivien, M. Mortier, Synthesis and optical characterizations of Yb-doped CaF2 ceramics, Optical Materials, Volume 31, Issue 5, March 2009, Pages 750-753) used vacuum sintering followed by hot isostatic pressing and post treatment to obtain the final transparency in the Yb-doped CaF₂ ceramics. These parameters cannot be standardized to all the fluoride powders of different make, as pyrohydrolysis is favoured at high temperatures. Further, the appearance of cracks on the surface and the poor mechanical strength of the product are a common consequence of these processing conditions. The fluoride nanoceramics show that the microstructure of the sintered ceramics have both intergranular and intragranular pores. The porosity plays a main role in the quality of transparency of the fluoride ceramics rather than the grain size itself. The average grain size of these ceramics varies from the range of 100 nm - 2 µm.

The fluoride ceramics are also reported to be fabricated by spark plasma sintering (SPS) by using very high pressure and the normal temperature range used is ∼ 700°C - 800°C with dwell time > 30 min (US2006/0011839). However, the appearance of cracks on the sintered sample is also prevalent in SPS samples. In order to avoid the appearance of cracks, powders of refractive oxides are added on both sides of the sample inside the mould of SPS.

All the aforesaid procedures cannot be employed in the case of fluoride samples of diameter > 10 mm. Because with the increase in diameter, the amount of heat to be supplied to heat the sample increases (which can provoke grain growth, decomposition and pyrohydrolysis), and the pressure as well has to be increased. Under such circumstances, it is impossible to industrialize the procedure to scale up production to samples of dimensions > 10 mm diameter, even less to samples of dimensions > 20 mm diameter.

The invention has been conceived to overcome difficulties encountered in prior art methods. Notably, it has been the aim of the invention to provide a method for preparing fluoride ceramics characterized with high transparency, notably high infrared transparency and good mechanical properties. It has been the aim of the invention to design a method applicable to precursors of powder materials from different fabrication methods which have nanosized grains and a minimum purity of 97.0% and providing a polycrystalline material of the same quality. It has been the aim of the invention to design a method that is cost effective and can be automated. It has been the aim of the invention to provide a method applicable to samples of diameter > 10 mm, and capable of extrapolation to samples of diameter > 20 mm.

### Summary of the invention

The invention is directed to a method for preparing polycrystalline fluoride ceramics using powder of fluoride ceramics nanocrystallites as starting material, wherein said method comprises:
(a) Optionally, a pre-processing step comprising subjecting the fluoride ceramics nanocrystallites to a temperature ranging from 100°C to 300°C at vacuum of 10⁻³ Pa (10⁻⁵ mbar) to 10⁻⁶ Pa (10⁻⁸ mbar) for 30 minutes to 10 hours,
(b) Applying to the powder of fluoride ceramics nanocrystallites a uniaxial pressure in the range from 1 to 200 MPa but less than the level of pressure applied during step (c), during 0.5 to 30 minutes, at a temperature from 2 to 80°C, to obtain a pre-compacted sample,
(c) Applying to the pre-compacted sample of step (b) a hydrostatic pressure by Cold Isostatic Pressing, in the range from 150 to 250 MPa, during 0.5 to 30 minutes, at a temperature from 2 to 80°C, to obtain a pre-compacted sample,
(d) Loading the pre-compacted sample from step (c) into a die and submitting said sample to a uniaxial compression in combination with electric field-assisted sintering, under vacuum equal to or higher than 5 Pa.

According to a favourite embodiment, the electric field-assisted sintering of step (d) is achieved in the following conditions:
- Pressure superior or equal to 10 MPa,
- Current is a pulsed DC electric current of from 1 A to 3000 A.
- Pulsed DC current voltage from 1 V to 20 V
- Duration of the pulsed current during 0.5 minute to 30 minutes,
- Temperatures are from 250° C to 800° C,
- The sample is in a vacuum equal to or higher than 5 Pa.

According to a favourite embodiment, said method comprises before step (a) a step of ball-milling of the nanocrystallites.

According to a favourite embodiment, step (c) comprises application of a pressure in the range from 180 to 220 MPa during 1 to 15 minutes.

According to a favourite embodiment, the fluoride ceramics nanocrystallites respond to one of the formulas (I) or (II) below:

XF(_{2-z})O_{z} (I)

M: XF(_{2-z})O_{z} (II)

Wherein X represents an element selected from alcali earth metals, and
M represents an element selected from lanthanides,
z represents a number, 0 ≤ z < 2.

Preferably, the fluoride ceramics nanocrystallites respond to one of the formulas (I) or (II) with z = 0.

Advantageously, X represents an element selected from: Ca, Mg, Ba.

Advantageously, M represents an element selected from: Yb, Dy, Er, Tm.

According to a favourite variant, the polycrystalline fluoride ceramics is made of one material.

According to another favourite variant, the polycrystalline fluoride ceramics is part of a multimaterial.

Preferably, according to this last variant, the multimaterial precursor materials, including the fluoride ceramics nanocrystallites, are arranged in a geometry corresponding to the multimaterial arrangement and steps (b), (c) and (d) are applied to the multimaterial precursor materials arrangement.

The invention is also directed to a polycrystalline fluoride ceramics obtained by this method, wherein a sample of this polycrystalline fluoride ceramics of 10 mm width and thickness of 2 mm presents light transmission in the wave length between 6 µm and 11 µm, superior or equal to 85%.

The invention is also directed to a polycrystalline fluoride ceramics obtained by this method, wherein, in at least one direction, it has a dimension superior or equal to 15 mm, preferably superior or equal to 20 mm, even more preferably superior or equal to 30 mm.

The invention is directed to the use of a material according to the invention or a material obtained by the method according to the invention as an optical element of a laser window, a microscope, a spectrometer, a refractory telescope, a spectrograph for astronomy instrumentation, an instrument for space, thermal imaging and night vision, a photolithography equipment, a scintillator, a breath analyser.

The infrared transmission of the materials obtained by this method is similar to that of conventionally used materials such as zinc selenide single crystal (ZnSe), zinc sulfide (ZnS) and germanium (Ge) single crystals. In order to overcome difficulties due to the toxic materials involved in the coating of such materials, alternative materials such as fluorides are used instead of ZnSe and ZnS. For application in some devices, in few cases transparency in the visible region is necessary as well. Under such circumstances Ge cannot be employed. The lower value of the refractive index of fluoride ceramics leads to a lower Fresnel impairment at their surface, so that antireflective coatings (AR) required for the manufacture of optical systems currently employed can be avoided. This aspect leads to a simplified process of fabrication of lenses done with these nanosized ceramics in terms of number of steps involved. It also avoids the usage of toxic material for the coating.

As compared to the prior art, the method according to the invention provides fluoride ceramics (polycrystalline material) that advantageously replace single crystals and present improved properties: improved mechanical resistance, improved resistance to scratching, improved lifetime, lack of toxicity. As a consequence of improved mechanical properties, fluoride ceramics of light weight can be used with comparable performance by reducing the thickness of the material, therefore a reduction of the equipment weight can be obtained, which is important for portable equipment. The lifetime of the equipment is also improved, resulting in longer intervals between maintenance steps, and lower servicing costs because of the hard resistance of the ceramic's surface

As compared to prior art fluoride ceramics, the method according to the invention avoids the formation of inclusions resulting from pyrohydrolysis reactions due to low temperature processing. The polycrystalline material obtained is of optimal quality with regards to optical homogeneity. The method also overcomes the difficulty of using nanoparticles of the powder starting material resulting from various processes, resulting in varied quality of the polycrystalline material. The method according to the invention provides a material of stable and regular characteristics, whatever the method of production of the starting material, provided that it is approximately of the same grain size.

The processing methodology also does not require the use of other refractory oxides inside the mould to avoid the formation of cracks in the ceramics. Usually, this step also helps in preventing the carbon contamination.

The fluoride ceramics obtained by the method according to the invention are transparent in the near, mid and far infra-red wavelengths and also in the visible wavelengths, with the advantage of permitting optical control of the equipment without disassembly.

Further, the method according to the invention gives access to fluoride ceramics samples of diameters superior to 10 mm. This method gives access to materials, like focus lens, with complex shapes such as curved structures. This method can be easily industrialized since it gives very reproducible results and its processing can be controlled by a computer. The results show that it is possible to use this process to make these ceramics in a few minutes, comparatively to single crystals that are expensive because, among other reasons, it takes several days to produce them.

Another advantage of the method according to the invention is that it gives access to fluoride based materials with different structures such as multilayers (planar) or core/crown (concentric) structures. The multimaterial structures, including core/crown structures containing same/different compositions of fluorides in the form of transparent ceramics are obtained at low temperature and short processing time, without any interface layer formation, normally observed when the material is processed at high temperatures, according to the prior art.

The inventors found a process which is shorter and more simple than those of the prior art.

### Detailed description

The invention is based on a method comprising a step of nanopowder thermal processing, isostatic powder compaction and a step of pulsed current activated high vacuum sintering, also known as spark plasma sintering (SPS), and allows the production of fluoride ceramics transparent in the UV-VIS wavelengths and until mid to far IR.

In the description and the claims, the term "polycrystalline" is used to define a fused mass of discrete crystal grains as opposed to a single crystal with no discontinuities in the crystal lattice.

In the description and the claims, at or around ambient temperature means: a temperature of from about 1°C to 100°C, preferably from 2 to 80°C, even more preferably from 5 to 50°C.

By vacuum higher than 5 Pa (5. 10⁻² mbar), is meant, in the description and the claims, a pressure inferior to 5 Pa. Such vaccum could reach for example 5. 10⁻³ Pa (5. 10⁻⁵ mbar) with the SPS-515S-FUJI device which is used in the experimental part.

### Starting material:

The starting material is selected from metal fluoride nanopowders. Advantageously, the fluoride nanopowder has at least 97.0% of purity. A wide variety of known polycrystalline nanopowders precursors can serve as the starting crystallites.

Favourite starting materials correspond to the formulas (I) and (II), below:

XF(_{2-z})O_{z} (I)

M : XF(_{2-z})O_{z} (II)

Wherein
X represents an element selected from alkali earth metals, and
M represents an element selected from lanthanides,
z represents a number, 0 ≤ z < 2.
When z is different from 0, the starting material is an oxyfluoride.

According to a favourite variant z = 0.

Advantageously, X represents an element selected from: Ca, Mg, Ba.

Advantageously, M represents an element selected from: Yb, Dy, Er, Tm

The method according to the invention can be applied to mixtures of starting materials of different formula. For example a mixture of BaF₂ and CaF₂ can lead to a combined material like Ca_{(1-y)}Ba_{y}F₂, wherein 0 < y < 1.

The method according to the invention is preferably applied to CaF₂ and to doped CaF₂, wherein the dopant is selected from lanthanides.

Alternately, the method can also be used with other fluorides such as MgF₂, BaF₂, oxyfluorides, or combinations of them wherein these fluoride ceramics crystallites can be doped or not.

Doping levels can vary widely. Favourite levels are within a range of from about 30 ppm to about 1,000 ppm by weight, and preferably from about 100 ppm to about 600 ppm by weight of dopant. However, for some applications, larger amounts of dopant can be used.

When composites of two or more starting powder materials are used, they can be selected in order to finely tune the qualities of the final product. For example, thermal and/or mechanical characteristics of the product can be optimized by selection of the components of the mixture on the basis of their individual thermal and/or mechanical properties. Optical characteristics can also be optimized by selection of composite components with well-matched refractive indices. In general, differences of about 10% or less, and preferably about 5% or less, in both thermal expansion coefficient and refractive index, provide the best results.

The fluoride precursor crystallites starting material is preferably selected among nano-sized crystallites. The expression "nano-sized," refers to a dimension of less than one micron. Favourite nano-sized particles as starting materials are those whose width is within the range of about 20 nm to about 100 nm, advantageously within the range of about 20 nm to about 50 nm for applications wherein IR transparency is required.

The term "width," used in reference to precursor crystallites, refers to the largest linear dimension of the crystallites. The term is equivalent to the term "diameter" as commonly used in descriptions of particle size in similar contexts. Since the crystallites are not necessarily spherical, the term « width » is more appropriate to include all kinds of shapes. For cubic crystallites and crystallites in the form of rectangular solids, "width" refers to the longest diagonal of the crystal.

Reference to "nano-sized" crystallites refers to the starting materials prior to exposure to the compaction and sintering steps, and also prior to the optional compression steps.

The shape and the size of the crystallites of the starting powders are important parameters. Advantageously, grain size of the crystallites used as starting material is homogeneous. Preferably at least 90% of the particles have a grain size within a range of x+10 nm, wherein x is the average or medium grain size, even more preferably at least 95%, better at least 98% of the particles have a grain size within a range of x+10 nm. Advantageously, x is inferior or equal to 100 nm.

Advantageously, morphology of the crystallites used as starting material is homogeneous. Homogeneous morphology means approximately the same shape. Based on the powder fabrication methodology, it is possible to have different morphologies of powder in the same batch of powder preparation, according to the pH. The needle shaped morphological powder has the tendency to be sintered at lower temperature in comparison to those of spherical or square shaped ones. In case there is a mixture of two or more different morphological crystallites, then it may act as a site of defect (dislocations, pores and cracks propagation). Hence, preferably, it has to be ensured that all the starting powders should have same morphology.

Preferably, the powders used in the method according to the invention are spherical.

When the method is used for the production of a multimaterial such as multilayers, and core/crown structures, the starting materials are at least two distinct materials, among which at least one is a fluoride nanoceramics as above disclosed. The two materials are selected in view of the final properties of the multimaterial.

### Preferred methods for preparing the fluoride ceramics:

### - Ball-milling:

Preferably, the crystallites are first mixed to achieve a uniform mixture. When combinations of components are used, this step permits homogenizing the material. A favourite method of mixing is ball-milling in conventional rotary mills with the assistance of tumbling balls. Such a method is well known to the skilled professional and favours homogeneous particle sizes. In the present study, we have used the powders that were either prepared by sol-gel, co-precipitation technique or by ball milling.

### - Pre-processing

The method can include a first optional step of pre-processing of fluoride nanopowders. In the present work, pre-processing is particularly recommended when the fluoride nanopowders are not of the same origin. The pre-processing step helps providing a material of homogeneous and regular physico-chemical characteristics. The pre-processing step comprises a heat treatment of fluoride nanopowders under vacuum. Advantageously, this step comprises submitting the fluoride nanopowders to a temperature ranging from 100°C to 300°C at vacuum of 10⁻⁵ mbar (10⁻³ Pa) to 10⁻⁸ mbar (10⁻⁶ Pa) for 30 minutes to 10 hours. Even more preferably, this step comprises subjecting the fluoride nanopowders to a temperature ranging from 150°C to 250°C at vacuum of 10⁻⁶ mbar (10⁻⁴ Pa) to 10⁻⁸ mbar (10⁻⁶ Pa) for 1 hour to 8 hours.

The inventors found that pre-processing of fluoride powders under high vacuum at high temperature for several hours has been beneficial to avoid formation of the secondary phase in fluoride ceramics appearing as white spots even at low temperatures of sintering. Further, this step helps in employing the same sintering conditions with fluoride powders of different make to obtain homogeneous optical transparency.

In the case of multimaterial, pre-processing of the starting materials is achieved in separate steps as two different materials are involved.

Equipment used for this step is usually high vacuum furnace.

### - Preforming:

Preforming is based on the application of a hydrostatic pressure to the powder at or around ambient temperature.

Application of hydrostatic pressure is advantageously preceded by the introduction of the precursor starting material, preferably after the pre-processing step, into a mould and a first pre-compaction step is achieved by application of a uniaxial pressure to the material located in the mould. For this first compaction step, the applied pressure is from 1 to 200 MPa. Advantageously the compaction step is achieved at or around room temperature. Application of uniaxial pressure inside the rigid mould is used to give a specific shape to the material, named green body (compressed powder before firing).

The fluoride ceramics, preferably having been exposed to the pre-processing and the first pre-compaction step, is then submitted to a hydrostatic pressure. Hydrostatic pressure is used to densify the green body, in order to obtain the maximum of density of the compacted raw powder. Compaction is achieved by introduction of the material in a flexible package, like for example inside a thermosealed pouch, followed by exposure of the packaged material to a hydrostatic pressure. Advantageously, hydrostatic pressure comprises application of a pressure within the range from 150 to 250 MPa during 0.5 to 30 minutes. Preferably, hydrostatic pressure comprises application of a pressure within the range from 180 to 220 MPa during 1 to 15 minutes. Preferably, hydrostatic pressure is applied at or around room temperature. The duration of pressure application controls the transparency of the ceramic. A too long exposure to pressure or pressure greater than 300 MPa at the pre-sintering step may contribute to a reduction of transparency.

Due to the significant pressures, the material is submitted to plastic deformation that causes agglomeration of the powders and contributes to providing a final material of homogeneous density.

Further, the compaction stage under application of pressures and temperatures at the pre-sintering stage helps in increasing the density of the green body. The density of the green body helps in avoiding the pores and brings the grains to the proximity of each other that would aid in increasing the density upon sintering. The appearance of cracks on the sintered fluoride optical ceramics is thus avoided. According to prior art processes, not including a compaction stage, the application of high pressure during sintering could initiate cracks on the surface of sintered ceramics.

The inventors found that application of about 200 + 10 MPa hydrostatic pressure for about 2 to 8 min was optimal condition to obtain fluoride optical ceramics. When the pressure applied was too low, the final density of the sintered body was less, which impedes the transparency. Further the number of pores also is high when the pressure applied is greater than 300 MPa at the sintering temperatures in the range of 500-800°C employed in this study. Another consequence is that when the pressure applied was too high, cracks could appear during sintering.

This step helps in optimizing the required level of pressure in the sintering phase and plays a vital role in the transparency and mechanical strength of the fluoride ceramic.

According to the material selected as starting material and the sample width, the skilled professional can adapt these parameters to obtain optimal transparency without impairing mechanical resistance.

In cases wherein the material is a multimaterial, including core/crown and multilayers structures, the multiple layer precursor materials are arranged in the same geometry as expected for the multimaterial and the preforming step is applied to the multiple layer precursor materials arrangement.

This method step uses a packaging material that can be closed tightly. For this it is advantageous to choose a heat sealable material such as a thermoplastic. The constituent of the packaging material must be elastically deformable, in particular it must be elastically deformable at temperatures of application of this step.

Among the packaging materials that may be used in this method step, mention may in particular be made of polyethylene (PE) and silicones. It is also possible to use a film composed of different layers of materials of one or more chemical nature. It is necessary that at least one layer be capable of being heat-sealed. It is also necessary that the packaging material be resiliently deformable at the temperatures and pressures of the process step. The shape of the packaging is selected to control the shape of the final material that is desired.

Equipment used for this step is usually cold isostatic press

### - Sintering:

Sintering is achieved by spark plasma sintering to obtain the final product, advantageously to obtain transparent fluoride ceramics.

The inventors found that preferably, sintering is preceded by a pre-sintering step inside the same heat treatment cycle.

The pre-compacted sample from the preceding step is loaded in a mould, which consists of a die and 2 punches. The sample is subjected to uniaxial compression in combination with electric field-assisted sintering or spark plasma sintering (SPS). The SPS process is an electrical sintering technique, which applies an ON-OFF DC pulse voltage and current from a special pulse generator on powder particles.

Conditions of the sintering step may vary, but preferred conditions are as follows:
- Pressure superior or equal to 10 MPa, preferably from about 10 MPa to about 200 MPa, and most preferably from about 30 MPa to about 40 MPa.
- Current is a pulsed DC electric current of intensity from 1 A to 3000 A and voltage from 1 to 20 V, alternating sequences of DC pulses followed by time periods without current. For example current configuration of ON: OFF pulse 12: 2 means a sequence of 12 DC pulses (3.3 ms) followed by two time periods without current.
- Preferred temperatures are within the range of from about 250°C to about 800°C, and most preferably from about 350°C to about 500°C, advantageously from about 350°C to about 450°C.
- Preferably, the step is achieved with a vacuum higher than 5 Pa (5. 10⁻² mbar)

The sintering can comprise several successive sintering steps of short duration under varied conditions. Preferably, the processing conditions of each step are within the above exposed ranges. Preferably, the total processing duration is within the above exposed time ranges.

The sintering step parameters are adapted in view of the crystallographic structure of the material and the high vacuum conditions. One advantage of the method according to the invention is that soft processing steps can be selected that will not degrade the chemical and crystallographic structure of the material.

In continuity with the pre-forming step, in cases wherein the material is a multimaterial, the precursor materials are arranged in the same geometry as expected for the final material and the sintering step, and optionally the pre-sintering step is applied to the precursor multimaterial arrangement.

Equipment used for this step is usually spark plasma sintering SPS-515S-FUJI.

### Materials obtained:

A ceramic material was obtained, which is transparent in the IR and Visible wave length. Optical measurement to evaluate the transparency of the ceramic was compared with that of single crystals currently used in the visible and infrared applications. Fluoride ceramics obtained by this method are more resistant to thermal cracking than fluoride single crystals. Fluoride ceramics obtained by this method have improved transparency in the IR range required for CO2 lasers as compared to materials obtained by SPS methods of the prior art.

The shape of the material, monolith or multimaterial, including core/crown and multilayers structures, can be a disc, a cube, a rectangle or any shape adapted to be submitted to a sintering step as above disclosed.

The method according to the invention gives access to samples of polycrystalline fluoride ceramics of dimensions superior to those of the prior art. Notably, samples of polycrystalline fluoride ceramics presenting at least a diameter superior or equal to 10 mm, advantageously superior or equal to 15 mm, can be obtained by this method and were not accessible by prior art methods.

Actually, the size limit of the sample is the size of the SPS mold. It would be possible to increase the size of the sample by increasing the diameter of the mold. It is also possible to alter the shapes of the sample by designing the mold of required shape or/and size.

### - Monolith material:

According to a first embodiment of the invention, the material obtained is a polycrystalline ceramics. This material advantageously responds to one of the formulas (I) and (II) that have been defined above.

The materials according to the invention can be distinguished from prior art materials in that a sample of 10 mm width and thickness of 2 mm presents light transmission in the wave length between 6 µm and 15 µm, superior or equal to 85 %, which is greater than single crystals of CaF₂ (which transmits only 30%) with a CO2 laser of 10. 6 µm.

The highlight of this invention is the possibility to sinter fluoride optical ceramics at low temperature (T ∼ 550°C) at ambient pressure. Avoidance of presintering procedure used till date for obtaining fluoride optical ceramics has been avoided in the present work by sintering under high vacuum conditions. High mechanical strength in comparison to fluoride single crystals has been achieved with the present invention.

### - Multimaterial structure

According to a second embodiment of the invention, the material obtained is a multimaterial structure including at least two superimposed layers or a crown layer and a core layer of ceramics.

The second layer or further layer can be made of a ceramics material of a different chemical composition as compared to the composition of the first layer. For example, one layer can be doped and the other layer not. Thanks to the method according to the invention, dopants do not diffuse through the structure from one layer to the other.

Such multimaterial comprising at least two ceramics layers of different chemical composition could not be obtained from prior art methods.

The two layers are advantageously selected in view of their use and in order for the multimaterial to provide improved properties as compared to monolithic materials.

Fluorides have a high coefficient of thermal expansion. According to the prior art, to avoid cracking of the ceramic due to the temperature difference, a thermal conductive material (Cu, Cr, doped fluoride, ..) is assembled in the manufacturing process of the transparent ceramic. This multimaterial fabrication is costly and it is difficult to control the interfacial reaction between the two layers involving the powders (where the probability of interaction between two chemically dissimilar structure is high). The function of heat elimination could be achieved through a multimaterial obtained directly by the above-disclosed method. For example, transparent ceramics according to the invention can be associated with a crown of high thermal conductivity transparent material. This association avoids thermal cracking of the transparent ceramics layer, reduces costs, and enables the use of the material in a wide range of applications for UV-Visible, IR at various temperatures.

The arrangement between the at least two layers can be any arrangement, provided that it is adapted to the final use: the multimaterial can consist in an arrangement of planar parallel layers, it can also be a core/crown structure or an encapsulated structure.

### Uses:

The prime application is intended towards the usage in IR devices. The composition of fluoride precursor is selected as a function of the IR wavelength concerned. The ceramics fabricated according to this invention have the capability to replace the single crystals of fluorides, where they are employed for diverse applications, and also all non fluoride single crystals which are employed for IR wavelength applications.

The various applications of these ceramics are as an optical element of a laser window, a microscope, a spectrometer, a refractory telescope, a spectrograph for astronomy instrumentation, an instrument for space, thermal imaging and night vision, a photolithography equipment, a scintillator, an electronic breathanalyser. Among favourite applications, it can be used as a laser window for laser graving / laser marking. They can also be used as lens for breathanalyser for testing alcohol.

Among the applications, use as CO2 laser windows is extremely interesting since currently only single crystals are used on the laser housing. CaF₂ ceramics according to the present invention have shown 80% of light transmission in the CO2 laser wavelength in comparison with the single crystal of CaF₂ that resulted in only 30% of light transmission in the CO2 laser.

According to the invention, it is possible to make a multimaterial. Notably, there is the possibility, in the same production cycle, of making a crown of another material of a different composition around the heart of polycrystalline ceramics constituting the lens. This crown layer can be designed to facilitate the mounting, assembly and / or use (mechanical strength, heat dissipation, ..) on the laser housing.

### Figures:

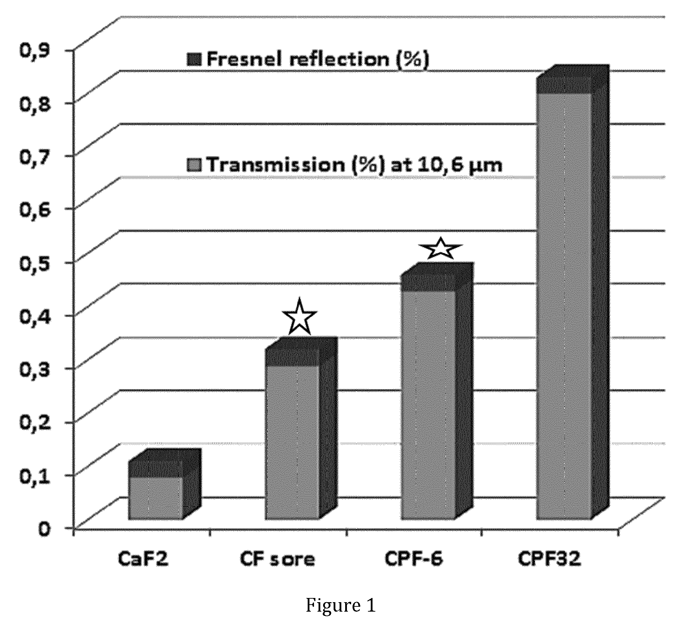

Figure 1: Graphic representing CO2 transmission at 10.6 µm for the following materials
CaF₂ : Single crystal obtained by the Bridgman technique (https://en.wikipedia.org/wiki/Bridgman%E2%80%93Stockbarger_technique)
CF SORE- Single crystal obtained by the Czochralski technique (https://en.wikipedia.org/wiki/Czochralski_process)
CPF 6- Ceramic sintered by SPS with random sintering parameters
CPF 32- Ceramic sintered by SPS as per the procedure given in the example A below

### Experimental part:

### I- Materials and equipment:

- Precursor: Fluoride ceramics nanopowders: CaF₂ commercialized by Fox Chemicals with purity 99. 9 % (grain size ∼ 20 - 40 nm).
   - - Press for step 2: uniaxial hydraulic press (with single piston).Mould for pre-forming (step 2): One die and one punch in stainless steal for uniaxial pressing with inner diameter equal to the graphite mould of SPS.
- Pouch for compaction step: flexible themosealable polymer commercialized under the name Kangjie sterilization roll.
- Hydrostatic press: Conventional Cold isostatic pressing equipment with water as the pressure medium is used. The volume of the autoclave vessel is 1 liter.
- Sintering equipment: Sintering of the samples were done by Spark Plasma Sintering (SPS). SPS experiments were performed with Spark Plasma Sintering system, Model SPS-515S-FUJI equipped with secondary vaccum pump. The experiments were performed under a vacuum higher than 5 Pa (5. 10⁻² mbar) called in the following as "high vaccum" with the electric pulse (3.3ms) sequence for the SPS applied a voltage of 12:2 (i.e., 12 ON/ 2 OFF). The experiment was carried out in a graphite mould with an inner diameter of 10 mm and an external diameter of 25 mm with internal diameter of the graphite die covered by carbon foil (Papyex). The mould was covered with carbon fiber felt to limit the loss of heat radiation. The preformed sample was inserted in the graphite mold between two punches.

### II- Methods:

### Pre-treatment method:

Preferably, fluoride powders have increased reactivity after ball milling. Ball milling is achieved in a ZrO₂ jar for 30 minutes in the dry state with a speed of 300 rpm for a volume of 20 ml containing 10 balls of ZrO₂. The grain sizes after milling were in the order of 20 nm.

### Method A: Preparation of a monolith transparent calcium fluoride ceramics

### Step 1: Pre-processing of fluoride nanopowders

Heat treatment could be applied to calcium fluoride nanopowders at 200°C and at high vacuum at least 10⁻⁵ mbar (10⁻³ Pa) for 5 h in a vacuum furnace.

### Step 2: Pre-forming of the material

0.5 g of powder from step 1 is weighed and compressed under uniaxial pressure between 1 and 200 MPa in the stainless steel mold of diameter 10 mm at room temperature. This value of pressure is less than the one applied in the Cold Isostatic Press but enough to handle easily the green body. Then the compressed sample is packaged in a flexible polymer pouch and is subjected to hydrostatic pressure of 200 MPa for 5 min. The final diameter of the pre-compacted sample is approximately 8 mm. It is reduced by the effect of high compaction of the powder.

### Step 3: Sintering by Spark plasma sintering

The precompacted sample of 8 mm diameter from step 2 is loaded in a graphite mold of 10 mm diameter and applied the heating rate and cooling rate of 100°C/min at 70 MPa for a dwell time 5 min. A pre-sintering is carried out in the SPS processing equipment with a sintering step at around 400°C under vacuum for 5 min. Then the sample was sintered at 500°C by vacuum higher than 5 Pa (5 10⁻² mbar), . The effect of texturing (change of diameter from 8 to 10 mm) happens during the processing of SPS and a final sintered sample of fluoride optical ceramic of diameter 10 mm is obtained. This effect increases the final transparency of the ceramic.

### Method B: Preparation of fluoride transparent ceramics with core/crown structure

### Step 1: Pre-processing of fluoride nanopowders

Heat treatment can be applied separately to fluoride nanopowders of different starting powders: CaF2 and Yb:CaF2, at 200°C and at high vacuum at least 10⁻⁵ mbar (10⁻³ Pa) for 5 h.

### Step 2: Pre-forming of the multimaterial

### - Core/crown structure

2 x 0.25 g of powders of two different compositions from step 1 are weighed and arranged as Core=CaF₂ and Crown =Yb:CaF₂, in a stainless steel mold of diameter 10 mm. They are compressed under uniaxial pressure between 1 and 200 MPa at room temperature. Here the mould is designed in such a way to fill the powders in the form of core and crown to accommodate two different types of compositions.

The compressed sample is packed in a flexible package and subjected to hydrostatic pressure of 200 MPa for 5 min. The final diameter of the pre-compacted sample is around 8 mm, reduced by the effect of high compaction of the powder

### - Parallel multilayer (planar) structure

In the case of parallel multilayer or gradient variation, the powders of different compositions CaF₂ and Yb:CaF₂ are stacked together as parallel layers in a stainless steel mold of diameter 10 mm at room temperature. Then the compressed sample is packed in a flexible package and subjected to hydrostatic pressure of 200 MPa for 5 min. The final diameter of the pre-compacted sample is 8 mm.

### Step 3: Sintering by Spark plasma sintering

### - Core/crown structure

The pre-compacted sample with diameter 8 mm from step 2 is loaded in a stainless steel mold of diameter 10 mm and we have employed the heating rate and cooling rate of 100°C/min at 70 MPa for a dwell time 5 min. Then the sample was sintered at 500°C under vacuum higher than 5 Pa (5. 10⁻² mbar) The effect of texturing happens during the processing of SPS and the final sintered sample of fluoride optical ceramic of diameter 10 mm is obtained.

### - Parallel multilayer (planar) structure

The pre-compacted / stacked sample from step 2 of 8 mm diameter containing different compositions is loaded in a mold of diameter 10 mm and we have employed the heating rate and cooling rate of 100°C/min at 70 MPa for a dwell time 5 min. Then the sample was sintered at 500°C under high vacuum higher than 5. 10⁻² mbar (5 Pa) The effect of texturing happens during the processing of SPS and the final sintered sample of fluoride optical ceramic of diameter 10 mm is obtained.

### III- Results:

The ceramics obtained by Method A were ground and polished to a thickness of 1 mm with optical finishing. Powder X-Ray Diffraction (XRD) analysis was performed with a PANalytical X'pert MDP diffractometer with θ-θ Bragg-Brentano configuration with a backscattering graphite monochromator for K_{α} Cu radiation working at 40 kV and 40 mA. The density was measured by the Archimedes method in distilled water. The microstructure was observed by a scanning electron microscope (Joel 840 SEM) on the fractured surface without polishing. The optical transmittance spectrum was measured by using a double beam spectrophotometer (Varian Cary 5000) at a range of between 200 nm and 7000 nm for a sample thickness of 1.5 mm. Further the optical ceramic was tested with CO2 laser wavelength of 10. 6 µm to study the light transmittance of this wavelength. Hardness measurements of the transparent ceramics were analyzed with Shimadzu DUH-211S Vickers hardness indenter with 500 g of the load.

It was inferred from XRD that no additional phases/decomposition are formed in the sintered samples. We have demonstrated the possibility to increase the optical and mechanical properties of the sintered samples of CaF₂ in the present work.

We have studied a procedure by spark plasma sintering with optimized sintering parameters at low temperature and the procedure is a single step process and does not involve presintering steps. This is a rapid process and is feasible to fabricate fluoride optical ceramics for CO2 laser applications as lens, windows or other complex shaped optical components. Fluoride optical ceramics can be considered as a validate candidate to be used without AR coatings.

## Claims

1. A method for preparing polycrystalline fluoride ceramics using powder of fluoride ceramics nanocrystallites as starting material, wherein said method comprises:
(a) Optionally, a pre-processing step comprising subjecting the fluoride ceramics nanocrystallites to a temperature ranging from 100°C to 300°C at vacuum of 10⁻³ Pa to 10⁻⁶ Pa for 30 minutes to 10 hours,
(b) Applying to the powder of fluoride ceramics nanocrystallites a uniaxial pressure in the range from 1 to 200 MPa but less than the level of pressure applied during step (c), during 0.5 to 30 minutes, at a temperature from 2 to 80°C, to obtain a pre-compacted sample,
(c) Applying to the pre-compacted sample of step (b) a hydrostatic pressure by Cold Isostatic Pressing, in the range from 150 to 250 MPa, during 0.5 to 30 minutes, at a temperature from 2 to 80°C, to obtain a pre-compacted sample,
(d) Loading the pre-compacted sample from step (c) into a die and submitting said sample to a uniaxial compression in combination with electric field-assisted sintering, under vacuum equal to or higher than 5 Pa.

2. A method according to claim 1 wherein the electric field-assisted sintering of step (d) is achieved in the following conditions:
• Pressure superior or equal to 10 MPa,
• Current is a pulsed DC electric current of from 1 A to 3000 A.
• Pulsed DC current voltage from 1 V to 20 V
• Duration of the pulsed current during 0.5 minute to 30 minutes,
• Temperatures are from 250°C to 800°C,
• The sample is in a vacuum equal to or higher than 5 Pa.

3. A method according to anyone of claims 1 and 2, wherein said method comprises before step (a) a step of ball-milling of the nanocrystallites.

4. A method according to anyone of claims 1 to 3, wherein step (c) comprises application of a pressure in the range from 180 to 220 MPa during 1 to 15 minutes.

5. A method according to anyone of claims 1 to 4, wherein the fluoride ceramics nanocrystallites respond to one of the formulas (I) or (II) below:
XF(_{2-z})O_{z} (I)
M: XF(_{2-z})O_{z} (II)
Wherein X represents an element selected from alcali earth metals, and
M represents an element selected from lanthanides,
z represents a number, 0 ≤ z < 2.

6. A method according to claim 5, wherein z = 0.

7. A method according to claim 5 or claim 6, wherein X represents an element selected from: Ca, Mg, Ba.

8. A method according to anyone of claims 5 to 7, wherein M represents an element selected from: Yb, Dy, Er, Tm.

9. A method according to anyone of claims 1 to 8, wherein the polycrystalline fluoride ceramics is made of one material.

10. A method according to anyone of claims 1 to 8, wherein the polycrystalline fluoride ceramics is part of a multimaterial.

11. A method according to claim 10 wherein the multimaterial precursor materials, including the fluoride ceramics nanocrystallites, are arranged in a geometry corresponding to the multimaterial arrangement and steps (b), (c) and (d) are applied to the multimaterial precursor materials arrangement.

12. A polycrystalline fluoride ceramics obtained by the method according to anyone of claims 1 to 11, wherein a sample of this polycrystalline fluoride ceramics of 10 mm width and thickness of 2 mm presents light transmission in the wave length between 6 µm and 11 µm, superior or equal to 85%.

13. A polycrystalline fluoride ceramics obtained by the method according to anyone of claims 1 to 11, wherein, in at least one direction, it has a dimension superior or equal to 15 mm, preferably superior or equal to 20 mm, even more preferably superior or equal to 30 mm.

14. Use of a material according to claim 12 or claim 13 or a material obtained by the method of claims 1 to 11 as an optical element of a laser window, a microscope, a spectrometer, a refractory telescope, a spectrograph for astronomy instrumentation, an instrument for space, thermal imaging and night vision, a photolithography equipment, a scintillator, a breath analyser.
